# EUROPÄISCHE PATENTANMELDUNG

(11) **EP 3 501 270 A1**
(43) Veröffentlichungstag der Anmeldung: **26.06.2019**
(21) Anmeldenummer: 18202448.9
(22) Anmeldetag: 25.10.2018
(51) Int. Cl.: A01K 11/00, A01K 27/00

(54) **VERFAHREN ZUM ANBRINGEN EINER EINEN TRANSPONDER BEINHALTENDEN VORRICHTUNG**

(30) Priorität: 20.12.2017 DE 102017130663
(71) Anmelder: CattleData GmbH, 86199 Augsburg (DE)
(72) Erfinder: Dietrich, Oliver, 86199 Augsburg (DE); von Wallenrodt, Albert, 86161 Augsburg (DE)
(74) Vertreter: Charrier Rapp & Liebau

(57) **Zusammenfassung**

Die Erfindung betrifft ein Verfahren zum Anbringen einer einen Transponder (8) beinhaltenden Vorrichtung (3) an einem Körperteil eines nicht-humanen Säugetiers (1). Nachteilig bei bekannten Systemen ist, dass sie häufig Fehlfunktionen haben.

Die Aufgabe, das Verfahren so weiterzubilden, dass ein möglichst störungsfreier Betrieb ermöglicht wird, wird dadurch gelöst, dass die Anbringung der Vorrichtung (3) unter Einhaltung eines Abstands von mindestens 5 cm zwischen dem Transponder (8) und dem Körperteil (1) erfolgt. Gegenstand der Erfindung ist auch eine Vorrichtung zur Durchführung des Verfahrens.

## Beschreibung

Die Erfindung betrifft ein Verfahren zum Anbringen einer einen Transponder beinhaltenden Vorrichtung an einem nicht-humanen Säugetier nach dem Oberbegriff des Anspruchs 1.

Bekanntlich werden in modernen Zuchtbetrieben für Rinder, Schweine, Ziegen, Schafe oder Kameliden die einzelnen Tiere mit sogenannten Ohrmarken zum Zwecke ihrer eindeutigen Identifizierung versehen. Die Ohrmarken können sichtbare Buchstaben- oder Zahlencodes, maschinenlesbare Barcodes oder andere Aufdrucke enthalten. Zusätzlich können sie auch mit einem NFC- oder RFID-Transponder versehen sein, welcher über eine entsprechende, an sich bekannte Abfragevorrichtung abgefragt werden kann. Dabei ist in dem Transponder bzw. dem in dem Transponder integrierten Chip ein Speicher angeordnet, in welchem Daten über das Säugetier verzeichnet sind. Ferner weist der Transponder eine Antenne auf, über welche er elektrische Energie von einem Lesegerät empfangen und damit die in dem Chip gespeicherten Daten aussenden kann. Auf diese Weise lässt sich der Transponder in an sich bekannter NFC-oder RFID-Technik auslesen.

Bei den bekannten, mit einem Transponder versehenen Ohrmarken ist der Transponder entweder in die Ohrmarke einschiebbar oder bereits fest mit der Ohrmarke verschweißt bzw. in die Ohrmarke eingeschweißt.

Die Daten eines mit einem solchem Transponder versehenen Säugetiers lassen sich nicht nur bei unmittelbarem Heranführen eines Lesegeräts auslesen, sondern auch unter Verwendung beabstandeter Antennen, welche beispielsweise an der Decke eines Stalls angebracht sein können. Auf diese Weise lässt sich ermitteln, welche Tiere sich in welchem Bereich des Stalls befinden. Ferner lassen sich Daten über deren Bewegungsaktivität und deren bevorzugte Aufenthaltsorte ermitteln.

Nachteilig bei den bekannten Systemen ist, dass sie häufig Fehlfunktionen haben, die dadurch hervorgerufen werden, dass der Körper des Tiers die auf den Transponder einwirkende elektromagnetische Strahlung der Antenne schwächt oder die noch viel schwächere, von dem Transponder ausgehende elektromagnetische Strahlung. Dies ist insbesondere dann der Fall, wenn sich der Körper des Tiers, an welchem der Transponder befestigt ist, zwischen dem Transponder und der nächstliegenden Antenne befindet.

Es besteht daher die Aufgabe, ein Verfahren zum Anbringen eines Transponders an einem Säugetier so weiterzubilden, dass ein möglichst störungsfreier Betrieb der RFID- bzw. NFC-Identifikation ermöglicht wird. Ferner besteht die Aufgabe, eine entsprechende Vorrichtung bereitzustellen.

Gelöst werden diese Aufgaben mit den kennzeichnenden Merkmalen der Ansprüche 1 bzw. 7. Vorteilhafte Ausgestaltungen sind den jeweiligen Unteransprüchen entnehmbar.

Einige Ausführungsbeispiele der Erfindung werden im Folgenden unter Bezugnahme auf die begleitenden Zeichnungen näher erläutert. Diese zeigen:
- **Fig. 1:**: Eine perspektivische Ansicht einer mit einer Ohrmarke mit einem Transponder versehenen Kuh;
- **Fig. 2:**: Eine perspektivische Ansicht einer mit einem an einem Halsband hängenden Transponder versehenen Kuh;
- **Fig. 3:**: Eine perspektivische Ansicht einer Kuh mit einem Transponder in deren Nacken;
- **Fig. 4:**: Eine perspektivische Ansicht einer Kuh mit einem Transponder im Bereich ihrer Schwanzwurzel.

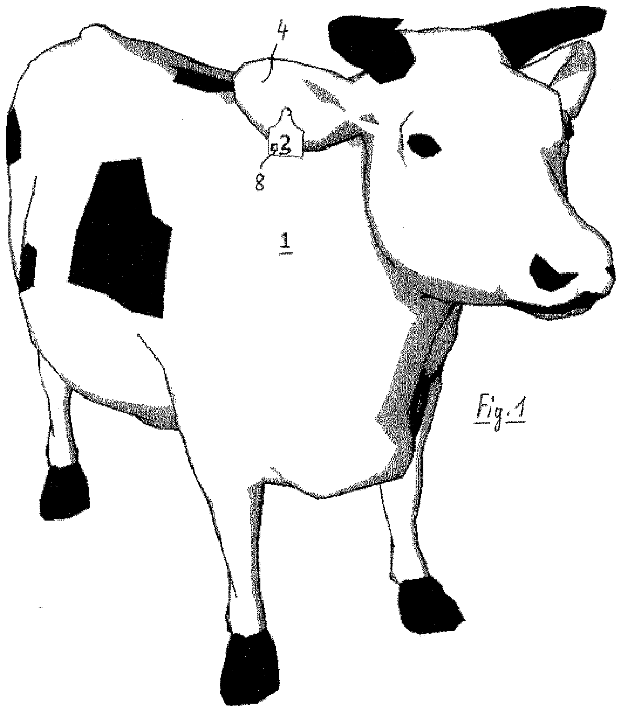

Figur 1 zeigt ein Säugetier 1, hier eine Kuh, mit einer als Ohrmarke bekannten Vorrichtung 3, welche einen Transponder 8 beinhaltet. Im Sinne dieser Beschreibung ist ein Transponder sowohl der eigentliche Transponderchip, als auch dessen Peripherie, also die Antenne zum Empfang und zur Aussendung elektromagnetischer Signale und ggf. dessen Einhausung. Der Transponder 8 ist im dargestellten Ausführungsbeispiel in die üblicherweise als Ohrmarke bezeichnete Vorrichtung 3 eingeschweißt und somit unempfindlich gegen Wasser und Schmutz. Die Vorrichtung 3 ist so an dem Ohr 4 des Säugetiers 1 angeordnet, dass der Transponder 8 einen Abstand von ca. 10 cm, mindestens jedoch 5 cm, zur Unterseite des Ohrs 4 aufweist. Dies kann durch eine ausreichend tiefe Wahl des Befestigungspunktes der Vorrichtung 3 an dem Ohr 4 erfolgen, so dass die Vorrichtung 3 pendelnd an dem Ohr 4 aufgehängt ist.

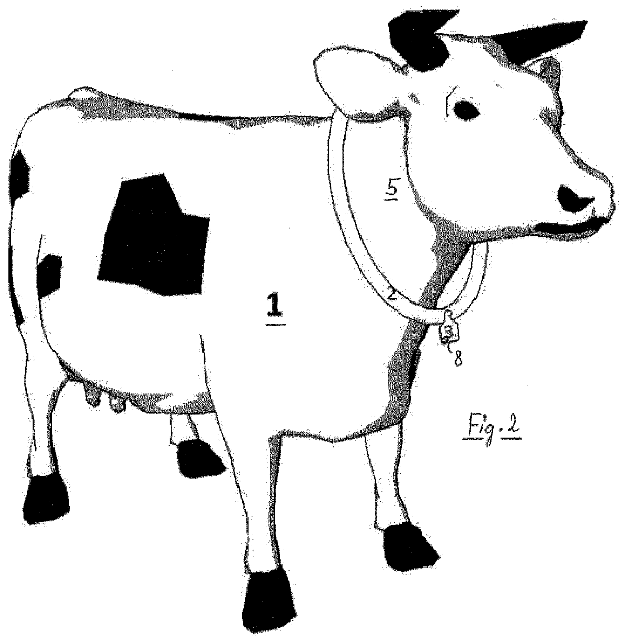

Bei der in Figur 2 dargestellten Ausführungsform trägt das Säugetier 1, wiederum eine Kuh, ein Halsband 2, an dessen Unterseite die Vorrichtung 3 mit dem in gleicher Weise integrierten Transponder 8 aufgehängt ist. Idealerweise ist die Vorrichtung pendelnd an der untersten Stelle des Halsbands 2 angeordnet, wodurch der in die Vorrichtung 3 integrierte Transponder 8 einen Abstand von ca. 10 cm, mindestens aber 5 cm, von dem Halsband 2 und damit auch von dem Hals 5 des Säugetiers aufweist.

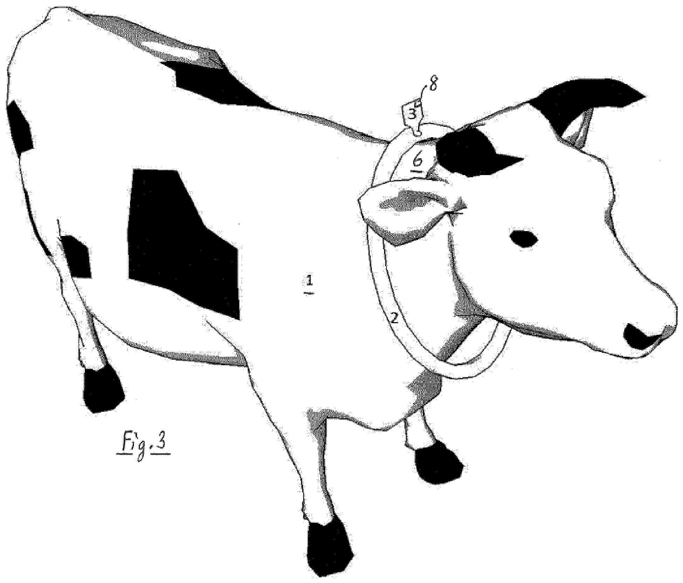

Bei der in Figur 3 dargestellten Ausführungsform trägt das Säugetier 1, wiederum eine Kuh, ein Halsband 2, an dessen Oberseite die Vorrichtung 3 mit dem Transponder 8 in aufgestellter Weise angeordnet ist, so dass sich die Vorrichtung 3 über dem Nacken 6 des Säugetiers 1 befindet. Bei dieser Ausführungsform ist durch geeignete Maßnahmen darauf zu achten, dass das Halsband 2 sich nicht verdreht, so dass die Vorrichtung 3 immer nach oben zeigt. Ferner ist die Vorrichtung 3 hier nicht pendelnd an dem Halsband 2 befestigt, sondern relativ starr mit dem Halsband 2 verbunden, wodurch eine aufrechte Orientierung der Vorrichtung 3 mit dem ganz oben angeordneten Transponder 8 erzielt wird. Auch bei dieser Ausführungsform ist die Höhe der Vorrichtung 3 so bemessen, dass ein Mindestabstand von ca. 10 cm, mindestens jedoch 5 cm zu dem Körper des Säugetiers 1, im vorliegenden Fall zu dessen Nacken 6, eingehalten wird.

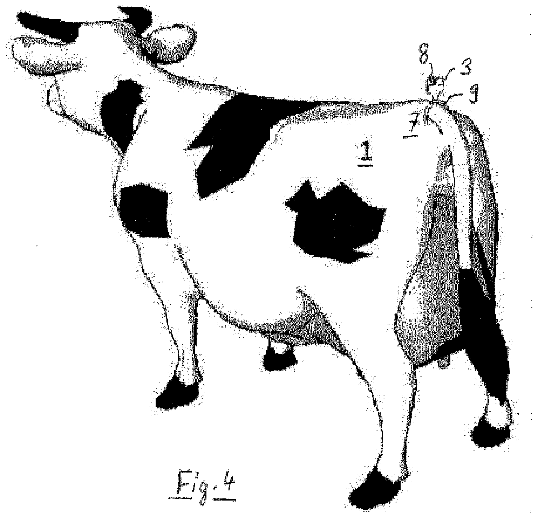

Bei der in Figur 4 gezeigten Ausführungsform befindet sich an der Schwanzwurzel 7 des Säugetiers 1 ein Ring 9, welcher straff über die Schwanzwurzel 7 geschoben ist und an seiner Oberseite die Vorrichtung 3 mit dem oben angeordneten Transponder 8 trägt. Auch hier ist darauf zu achten, dass sich der Ring 9 nicht gegenüber dem Schwanz des Säugetiers 1 verdrehen kann und dass die Vorrichtung 3 relativ starr an dem Ring 9 angeordnet ist, wodurch eine vertikale Orientierung der Vorrichtung 3 mit ganz oben angeordnetem Transponder 8 gewährleistet wird. Auch hier ist ein Abstand von 10 cm, mindestens jedoch 5 cm zwischen der Schwanzwurzel 7 und dem Transponder 8 erwünscht.

Allen dargestellten Ausführungsformen ist gemeinsam, dass der Transponder 8 über die Vorrichtung 3 so an dem Körper des Säugetiers 1 angeordnet wird, dass praktisch immer, also bei jeder Bewegung des Säugetiers 1, ein Mindestabstand des Transponders 8 von dem Körper des Säugetiers 1 eingehalten wird. Dieser Mindestabstand liegt bei 5 cm, vorzugsweise jedoch bei 10 cm oder sogar darüber. Hierdurch ist es unmöglich, dass der Körper des Säugetiers 1 die auf den Transponder eintreffende elektromagnetische Strahlung oder die von ihm ausgesendete elektromagnetische Strahlung schwächt. In jedem Fall ist der Grad einer solchen Schwächung wesentlich geringer als wenn sich der Transponder 8 in unmittelbarem Körperkontakt mit dem Säugetier 1 befände. Hierdurch wird eine zuverlässige Erkennung der Tiere innerhalb eines Stalls mit den sich daraus ergebenden Vorteilen bei der Auswertung ermöglicht.

Die Erfindung lässt sich auch in anderen Varianten verwirklichen, wobei der Transponder 8 an einer beliebigen Stelle des Körpers des Tiers angebracht werden kann, solange erfindungsgemäß gewährleistet ist, dass ein Mindestabstand, im vorliegenden Fall 5 cm, zwischen Transponder und Körper des Säugetiers eingehalten wird.

## Patentansprüche

1. Verfahren zum Anbringen einer einen Transponder (8) beinhaltenden Vorrichtung (3) an einem Körperteil eines nicht-humanen Säugetiers (1), **dadurch gekennzeichnet, dass** die Anbringung der Vorrichtung (3) unter Einhaltung eines Abstands von mindestens 5 cm zwischen dem Transponder (8) und dem Körperteil (1) erfolgt.

2. Verfahren nach Anspruch 1, **dadurch gekennzeichnet, dass** es sich bei dem Körperteil um das Ohr (4) des Säugetiers (1) handelt und die Vorrichtung (3) pendelnd an der Unterseite des Ohrs (4) angebracht wird.

3. Verfahren nach Anspruch 1, **dadurch gekennzeichnet, dass** es sich bei dem Körperteil um den Hals (5) des Säugetiers (1) handelt und die Vorrichtung (3) pendelnd an einem Halsband (2) angeordnet wird.

4. Verfahren nach Anspruch 1, **dadurch gekennzeichnet, dass** es sich bei dem Körperteil um den Nacken (6) des Säugetiers (1) handelt und die Vorrichtung (3) stehend oberhalb des Nackens (6) angeordnet wird.

5. Verfahren nach Anspruch 1, **dadurch gekennzeichnet, dass** es sich bei dem Körperteil um die Schwanzwurzel (7) des Säugetiers (1) handelt und die Vorrichtung (3) stehend über der Schwanzwurzel (7) angeordnet wird.

6. Verfahren nach einem der voranstehenden Ansprüche, **dadurch gekennzeichnet, dass** das Säugetier (1) ein Paarhufer, insbesondere ein Rind, ein Schwein, eine Ziege, ein Schaf oder ein Kamelide ist.

7. Verfahren nach einem der voranstehenden Ansprüche, **dadurch gekennzeichnet, dass** der Abstand mindestens 10 cm beträgt.

8. Vorrichtung zur Durchführung des Verfahrens nach einem der voranstehenden Ansprüche mit Befestigungsmitteln und integriertem Transponder (8), **dadurch gekennzeichnet, dass** der Abstand zwischen Befestigungsmitteln und Transponder (8) mindestens 5 cm beträgt.

9. Vorrichtung nach Anspruch 8, **dadurch gekennzeichnet, dass** sie einen flachen Grundkörper aus Kunststoff aufweist, in welchem der Transponder (8) eingegossen ist.

10. Vorrichtung nach einem der Ansprüche 8 oder 9, **dadurch gekennzeichnet, dass** der Abstand mindestens 10 cm beträgt.
